# EUROPEAN PATENT SPECIFICATION

(11) **EP 1 420 977 B1**
(45) Date of publication and mention of the grant of the patent: **25.05.2005**
(21) Application number: 02722685.1
(22) Date of filing: 27.03.2002
(51) Int. Cl.: B60L 11/18

(54) **CONNECTING DEVICE FOR AN ELECTRIC WORK VEHICLE**
ANSCHLU ELEMENT FÜR EIN ELEKTRISCHES FAHRZEUG
DISPOSITIF DE CONNEXION POUR VEHICULE DE TRAVAIL ELECTRIQUE

(30) Priority: 31.08.2001 IT BO20010527
(43) Date of publication of application: 26.05.2004
(73) Proprietor: Uguzzoni, Ettore, 41057 Spilamberto (IT); Nervosi, Mauro, 41054 Marano Sul Panaro (IT)
(72) Inventor: Uguzzoni, Ettore, 41057 Spilamberto (IT); Nervosi, Mauro, 41054 Marano Sul Panaro (IT)
(74) Representative: Modiano, Guido, Dr.-Ing.
(86) International application number: PCT/IT2002/000197
(87) International publication number: WO 2003/018347

(56) References cited:
- DE-A- 3 218 148
- DE-A- 19 535 294
- GB-A- 2 121 971
- US-A- 5 534 759
- US-A- 6 057 688

## Description

### TECHNICAL FIELD

The present invention relates to a connecting device for an electric work vehicle.

### BACKGROUND ART

As is known, numerous mechanical devices, such as fork-lift trucks or conveyors, are powered by electric motors, which must supply high power levels, e.g. in the region of tens of kilowatts. Such devices must obviously be equipped with a battery (drive battery) connectable selectively to the electric motor and any other user devices during normal operation, and to a battery charger for routine charging; which connection is made using special connectors capable of withstanding extremely high current (of over 300 A).

Operation and particularly charging of the battery are monitored by electronic control circuits, which are normally included in the battery charger, and which, in particular, measure the battery voltage and various other operating parameters, such as temperature, and interrupt charging when the battery voltage reaches a predetermined threshold.

Since the battery voltage, however, is also affected by external environmental factors and by ageing of the battery components, such a method fails to provide for accurately controlling the actual charge of the battery, or for monitoring discharge of the battery during normal operation, i.e. when the battery is connected to the user devices as opposed to the charger.

In either case, the actual charge may be much lower than estimated on the basis of the battery voltage.

This clearly constitutes a serious drawback, by the autonomy of a user device powered by an undercharged battery being less than predicted.

DE 195 35 294 A (WENZL) discloses a method and apparatus for monitoring a battery-powered vehicle and its battery. In one embodiment a connection device comprises at least two supply cables, which are connected at first ends to the battery and at second ends to a connector for selective connection to a battery charger or to first and second user devices. The arrangement further comprises an electronic control circuit connected to the supply cables and fixed to the battery, as well as a current transducer in the form of a shunt for detecting a current flowing in the supply cables and a voltage detecting circuit for detecting a voltage between the supply cables, both integrated into the structure of the battery.

DE 32 18 148 A (DETA-AKKUMULATORENWERK GmbH) discloses a method and system for controlling power supply to an electric work vehicle, such as a fork-lift truck, the system comprising a battery, a battery charger and a measuring and control device, which, like that of DE '294, is integrated with the battery.

US 6 057 688 A (KAWAI ET AL) concerns a method of controlling a system for supplying an electrically powered vehicle comprising a load, a battery and a battery charger. A schematic connection circuit is disclosed, comprising first and second supply cables connectable to a battery, and also selectively connectable to a battery charger and to a user device. The circuit of US '688 further comprises an electronic control circuit connected to the first and second supply cables, and current transducer means for detecting a current flowing in the supply cables. However there is no indication of how the circuit is to be physically implemented.

### DISCLOSURE OF INVENTION

It is an object of the present invention to provide a connecting device, designed to eliminate the aforementioned drawbacks.

According to the present invention, there is provided a connecting device as claimed in claim 1.

Said electronic control circuit is housed in a seat on said supporting body.

The connecting device so formed advantageously provides for measuring current flow in the supply cables both when charging and during normal operation (discharging) of the battery, so that the overall charge of the battery can be determined accurately instant by instant. For which purpose, in particular, the electronic control circuit is used.

Moreover, the connecting device is cheap and easy to produce, is compact, and can be installed extremely easily.

### BRIEF DESCRIPTION OF THE DRAWINGS

A non-limiting embodiment of the invention will be described by way of example with reference to the accompanying drawings, in which:
Figure 1 shows a simplified view in perspective of a fork-lift truck powered by an electric motor;
Figure 2 shows a simplified block diagram of a system for supplying and recharging the Figure 1 fork-lift truck;
Figure 3 shows a cross section of a connecting device in accordance with the present invention;
Figure 4 shows a top plan view, with parts removed for clarity, of the Figure 3 connecting device;
Figure 5 shows a block diagram of part of the Figure 3 connecting device;
Figures 6 and 7 show flow charts of procedures implemented by the Figure 3 connecting device.

### BEST MODE FOR CARRYING OUT THE INVENTION

The present invention may be applied to advantage, for example, to a fork-lift truck powered by an electric motor, to which reference is made in the following description purely by way of example.

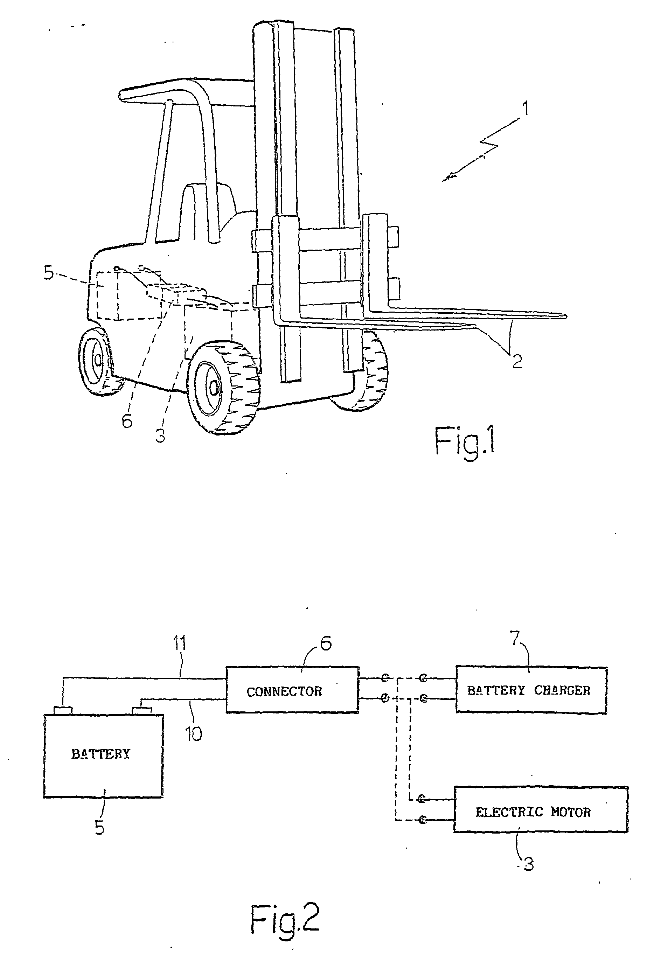

Figure 1 shows a fork-lift truck 1 with movable arms (forks) 2 for lifting and transporting loads, and powered by an electric motor 3 supplied by a battery 5.

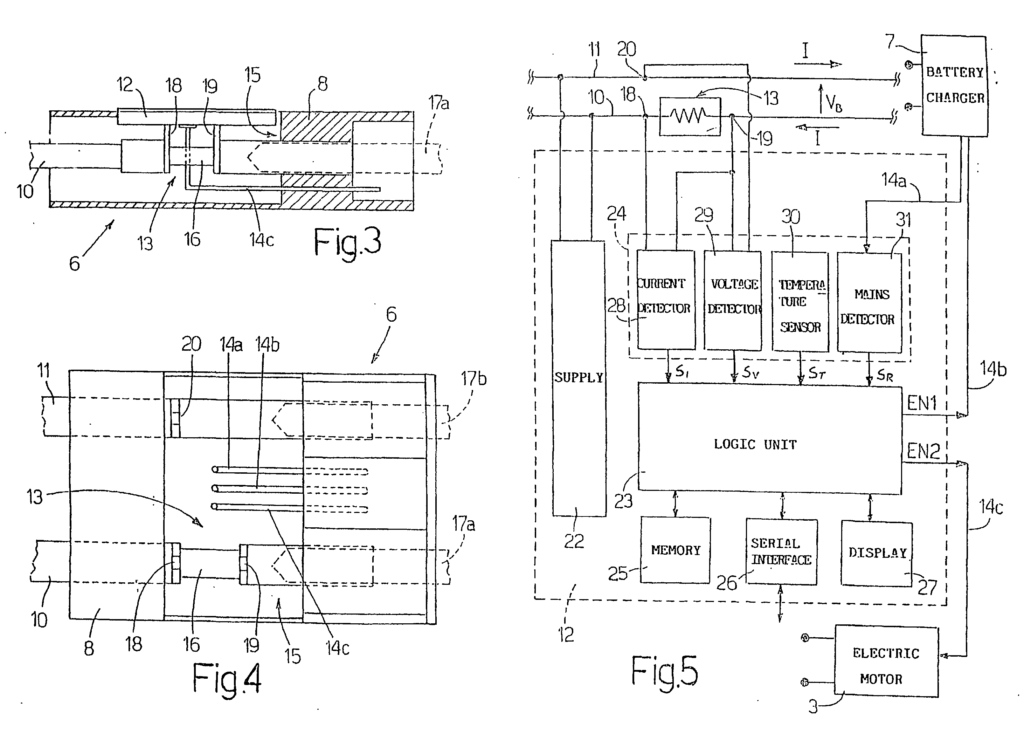

As shown schematically in Figure 2, battery 5 is connectable selectively, by means of a connecting device 6, to electric motor 3 and to a battery charger 7. More specifically (Figures 3 and 4), connecting device 6 comprises a supporting body 8 made of insulating material and housing a first and a second supply cable 10, 11 connected to battery 5; an electronic control circuit 12 housed at least partly in a seat 15 on supporting body 8; and a current transducer 13 for detecting a current I flowing in supply cables 10, 11. Connecting device 6 also comprises a first, a second, and a third control cable 14a, 14b, 14c, also housed in supporting body 8 and connected to the electronic control circuit. More specifically, the first and second control cable 14a, 14b are connectable to battery charger 7, and the third control cable 14c is connectable to electric motor 3. Figures 3 and 4 also show, by dash lines, a first and a second connecting element 17a, 17b forming part of a known connector (not shown in detail) connectable to connecting device 6 (and of which connecting cables 50, 51 are provided for connecting electric motor 3 and battery charger 7 to battery 5 - Figure 2).

Current transducer 13 comprises a resistive element ("shunt") 16 preferably made of manganin and located in series with first or second supply cable 10, 11, e.g. first supply cable 10. At opposite ends, resistive element 16 has a first and a second detecting contact 18, 19 connected to electronic control circuit 12 as explained in detail later on; a third detecting contact 20, also connected to electronic control circuit 12, is provided on second supply cable 11; and current transducer 13 and detecting contacts 18-20 are all housed in seat 15.

As shown in Figure 5, electronic control circuit 12 comprises a supply circuit 22; a logic processing unit 23; a sensor assembly 24; a memory 25; a serial interface 26; and a display device 27. More specifically, sensor assembly 24 comprises:
a current detecting circuit 28 having two inputs connected respectively to first and second detecting contact 18, 19; and an output connected to logic processing unit 23 and supplying a first control signal S_{I} indicating the current I flowing in supply cables 10, 11;
a voltage detecting circuit 29 having two inputs connected respectively to first and third detecting contact 18, 20; and an output connected to logic processing unit 23 and supplying a second control signal S_{V} indicating the voltage V_{B} between supply cables 10, 11;
a temperature sensor 30 having an output connected to logic processing unit 23 and supplying a third control signal S_{T}; and
a mains detector 31 having an input connectable to battery charger 7 over first control cable 14a; and an output connected to logic processing unit 23 and supplying a fourth control signal S_{R} having a first value when battery 5 is connected to battery charger 7, and a second value when it is not.

Logic processing unit 23 is also connected to memory 25, to serial interface 26, and to display device 27, and has a first output 25a connectable over second control cable 14b to an enabling input of battery charger 7 and supplying a first enabling signal EN1, and a second output 25b connectable over third control cable 14c to a user enabling input of truck 1 and supplying a second enabling signal EN2.

Serial interface 26, in itself known, permits connection to an external electronic computer (e.g. a palmtop computer) to access memory 25, both to read its content (utilization history and charge operations) and to program a number of operating parameters (threshold values, maximum charge times) explained in detail later on.

Display device 27, also of known type, provides for displaying information relative to the status of battery 5, e.g. charge level or any alarms.

In actual use, logic processing unit 23 receives control signals S_{I}, S_{V}, S_{T}, S_{R}, samples them in known manner, and uses them to perform one of the control procedures described in detail later on. On the basis of the value of first control signal S_{I}, showing instant by instant the current I flowing in supply cables 10, 11, the logic processing unit determines the available charge Q_{B} value of battery 5, and records it in memory 25 (normally in ampere-hours, Ah).

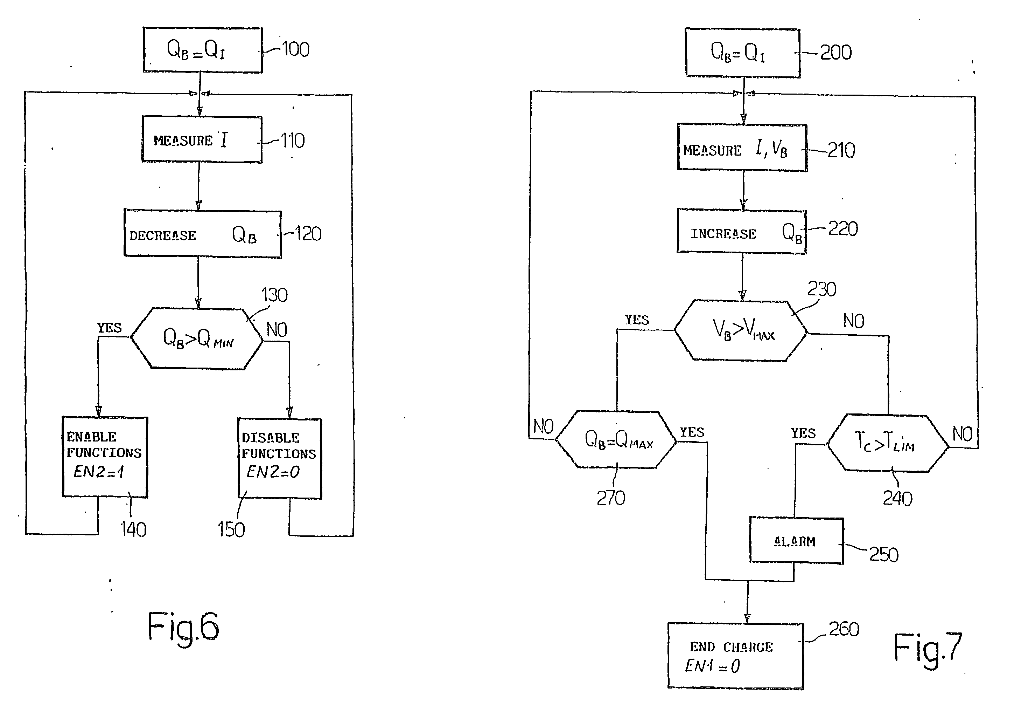

The following is a description, with reference to Figure 6, of a discharge control procedure performed by logic processing unit 23 when battery 5 is connected to electric motor 3 (in the example shown, when the fork-lift truck is operating). In this case, the second output 25b of the logic processing unit is connected to the enabling input of electric motor 3 over third control cable 14c.

To begin with (block 100), the available charge Q_{B} value of battery 5 is made equal to an initial charge Q_{I} value recorded in memory 25, and which is the charge value determined and memorized after the last time battery 5 is charged or used. The value of current I (block 110) is then measured by means of current detecting circuit 28, and the available charge Q_{B} value is decreased and recorded in memory 25 (block 120). More specifically, the available charge Q_{B} value is calculated by time integration of current I.

The available charge Q_{B} value is then compared with a threshold charge Q_{MIN} value (block 130). If the available charge Q_{B} is higher than the threshold charge (YES output of block 130), the second control signal EN2 is set to a first, e.g. high, logic value to enable normal operation of fork-lift truck 1 (block 140); conversely (NO output of block 130), the second control signal EN2 is set to a second (low) logic value (block 150) to disable operation of forks 2 of truck 1 (e.g. to disable the solenoid valves controlling the hydraulic circuit (not shown) powering forks 2).

In other words, to prevent battery 5 from discharging completely before it can be charged, at least some of the user devices of truck 1 are disabled, and the threshold charge Q_{MIN} is used as a reserve to get truck 1 to battery charger 7.

The cycle of measuring current I (block 110), estimating the available charge Q_{B} (block 120), and monitoring the remaining charge (block 130), is performed continually until battery 5 is disconnected from electric motor 3, or until threshold charge Q_{MIN} is reached.

The following is a description, with reference to Figure 7, of a charge control procedure performed by logic processing unit 23 when battery 5 is connected to battery charger 7. In this case, the input of mains detector 31 and the first output 25a of the logic processing unit are connected to battery charger 7 over first and second control cable 14a, 14b respectively. More specifically, at this step, mains detector 31 is activated and sets the fourth control signal S_{R} to the first value, so that logic processing unit 23 is controlled to perform the charge control procedure.

To begin with, the available charge Q_{B} value is made equal to the initial charge Q_{I} value recorded in memory 25 (block 200); the values of current I and battery voltage V_{B} are then measured by means of current detecting circuit 28 and voltage detecting circuit 29 respectively (block 210); and the available charge Q_{B} value is then increased and recorded in memory 25 (block 220). In this case too, the available charge Q_{B} is estimated by time integration of current I.

A first test is then performed (block 230), in which the battery voltage V_{B} is compared with a nominal voltage (V_{MAX}) value of, say, 2.4*N V, where N is the number of component elements of battery 5. If the battery voltage V_{B} is less than the nominal voltage V_{MAX} (NO output of block 230), a second test is performed (block 240) to determine whether the charge time T_{C}, since the start of the charge operation, is greater than a limit time T_{LIM}. If it is (YES output of block 240), an alarm is generated and displayed by display device 27 (block 250), the charge procedure is terminated (block 260), the first enabling signal is set to a predetermined (e.g. low) logic value, and battery charger 7 is disabled. Conversely, charging continues, and current I and battery voltage V_{B} are again measured (block 210).

If, on the other hand, battery voltage V_{B} is greater than nominal voltage V_{MAX} (YES output of block 230), a third test is performed to determine whether the available charge Q_{B} has reached a maximum value Q_{MAX} corresponding to the capacity of battery 5 (block 270). If it has (YES output of block 270), the charge procedure is terminated (block 260); if it has not (NO output of block 270), the charge procedure continues. In other words, a double check is made of battery voltage V_{B} and available charge Q_{B}, and the charge procedure is not terminated until battery 5 has been charged sufficiently to restore the maximum charge value Q_{MAX}.

Further advantages of the present invention will be clear from the foregoing description.

In particular, monitoring the current and calculating the remaining charge of the battery provide for optimizing the battery charge procedure by injecting exactly the amount of current required to replace the amount discharged during operation of the battery, thus reducing the time and energy required to charge the battery, and preventing premature ageing of the battery.

Moreover, by providing the connecting device with a control circuit comprising a logic processing unit and a memory, the available charge can be determined and recorded over time, thus not only giving a reliable indication of the battery charge level, but also measuring energy consumption within a given time interval. This is particularly useful in that work vehicles, such as fork-lift trucks, are frequently hired, and electric energy consumption is a reliable parameter by which to determine cost.

Clearly, changes may be made to the connecting device as described herein without, however, departing from the scope of the present invention, which is defined by the appended claims.

## Claims

1. A connecting device for an electric work vehicle, comprising a supporting body (8) made of insulating material and housing at least a first and a second supply cable (10, 11) connectable to a battery (5); said first and second supply cable (10, 11) also being selectively connectable to a battery charger (7) and to at least one user device (3); an electronic control circuit (12) connected to said first and second supply cable (10, 11) ; and current transducer means (13) for detecting a current flowing in said first and second supply cable (10; 11) ;
**characterized in that** said electronic control circuit (12) and said current transducer means (13) are housed in a seat (15) on said supporting body (8) and **in that** said supporting body (B) is configured for engagement with connecting elements (17a,17b) of a connector, for connecting said battery charger (7) and said at least are user device (3) to said battery (5).

2. A device as claimed in Claim 1, **characterized in that** said current transducer means (13) comprise a resistive element (16) located in series with said first or said second supply cable (10, 11); said resistive element (16) having, at apposite ends, a first and a second detecting contact (18, 19) connected to said electronic control circuit (12).

3. A device as claimed in any one of the foregoing Claims, **characterized in that** said electronic control circuit (12) also comprises a current detecting circuit (28) connected to said first and second detecting contact (18, 19) of said current transducer means (13) and supplying a first control signal (S_{I}); a voltage detecting circuit (29) supplying a second control signal (Sᵥ) related to a voltage (V_{S}) between said first and second supply cable (10, 11); and temperature sensing means (30).

4. A device as claimed in Claim 3, **characterized in that** said electronic control circuit (12) comprises numeric processing means (23) connected to said current detecting circuit (28) and to said voltage detecting circuit to receive said first and second control signal (S_{I}, S_{V}), and to supply a number of enabling signals (EN1, EN2); memory means (25) connected to said numeric processing means (23); and serial communication means (26).

5. A system for supplying an electric work vehicle, and comprising an electric motor, a battery (5), a battery charger (7), and a connecting device (6) for connecting said battery (5) alternatively to said user device (3) and to said battery charger (7); **characterized in that** said connecting device (6) is as claimed in any one of Claims 1 to 4.

## Patentansprüche

1. Verbindungsvorrichtung für ein Elektroarbeitsfahrzeug, mit einem Haltekörper (8), der aus einem isolierenden Werkstoff hergestellt ist und wenigstens ein erstes und ein zweites Versorgungskabel (10, 11), die mit einer Batterie (5) verbunden werden können, aufnimmt; wobei das erste und das zweite Versorgungskabel (10, 11) wahlweise auch mit einem Batterieladegerät (7) und wenigstens einer Anwendervorrichtung (3) verbunden werden können; einer elektronischen Steuerschaltung (12), die mit dem ersten und dem zweiten Versorgungskabel (10, 11) verbunden ist; und Strommesswandlermitteln (13), um einen in dem ersten und dem zweiten Versorgungskabel (10; 11) fließenden Strom zu erfassen;
**dadurch gekennzeichnet, dass** die elektronische Steuerschaltung (12) und die Strommesswandlermittel (13) in einem Sitz (15) an dem Haltekörper (8) untergebracht sind und dass der Haltekörper (8) so konfiguriert ist, dass er mit Verbindungselementen (17a, 17b) eines Verbinders in Eingriff gelangen kann, um das Batterieladegerät (7) und die wenigstens eine Anwendervorrichtung (3) mit der Batterie (5) zu verbinden.

2. Vorrichtung nach Anspruch 1, **dadurch gekennzeichnet, dass** die Stromwandlermittel (13) ein ohmsches Element (16) umfassen, das mit dem ersten oder dem zweiten Versorgungskabel (10, 11) in Reihe geschaltet ist; wobei das ohmsche Element (16) an gegenüberliegenden Enden einen ersten bzw. einen zweiten Erfassungskontakt (18, 19), die mit der elektronischen Steuerschaltung (12) verbunden sind, besitzt.

3. Vorrichtung nach einem der vorhergehenden Ansprüche, **dadurch gekennzeichnet, dass** die elektrische Steuerschaltung (12) außerdem eine Stromerfassungsschaltung (28), die mit dem ersten und dem zweiten Erfassungskontakt (18, 19) der Strommesswandlermittel (13) verbunden ist und ein erstes Steuersignal (S_{I}) liefert, eine Spannungserfassungsschaltung (29), die ein zweites Steuersignal (S_{V}) liefert, das mit einer Spannung (V_{B}) zwischen dem ersten und dem zweiten Versorgungskabel (10, 11) in Beziehung steht; und Temperaturerfassungsmittel (30) umfasst.

4. Vorrichtung nach Anspruch 3, **dadurch gekennzeichnet, dass** die elektronische Steuerschaltung (12) numerische Verarbeitungsmittel (23), die mit der Stromerfassungsschaltung (28) und mit der Spannungserfassungsschaltung verbunden sind, um das erste und das zweite Steuersignal (S_{I}, S_{V}) zu empfangen und um eine Anzahl von Freigabesignalen (EN1, EN2) zu liefern; Speichermittel (25), die mit den numerischen Verarbeitungsmitteln (23) verbunden sind; und Mittel (26) zum seriellen Datenaustausch umfasst.

5. System für die Versorgung eines Elektroarbeitsfahrzeugs, mit einem Elektromotor, einer Batterie (5), einem Batterieladegerät (7) und einer Verbindungsvorrichtung (6) für die Verbindung der Batterie (5) alternativ entweder mit der Anwendervorrichtung (3) oder mit dem Batterieladegerät (7); **dadurch gekennzeichnet, dass** die Verbindungsvorrichtung (6) eine Vorrichtung nach einem der Ansprüche 1 bis 4 ist.

## Revendications

1. Dispositif de connexion pour véhicule électrique de travail, comprenant un boîtier de support (8) réalisé en matériau isolant et abritant au moins un premier et un second câbles d'alimentation (10, 11) connectables à une batterie (5) ; lesdits premier et second câbles d'alimentation (10, 11) étant également sélectivement connectables à un chargeur de batterie (7) et à au moins un dispositif utilisateur (3) ; un circuit électronique de contrôle (12) connecté auxdits premier et second câbles d'alimentation (10, 11) ; et un moyen de transducteur de courant (13) pour détecter un passage de courant dans lesdits premier et second câbles d'alimentation (10, 11); **caractérisé en ce que** ledit circuit électronique de contrôle (12) et ledit moyen de transducteur de courant (13) sont logés dans un emplacement (15) sur ledit boîtier de support (8) et **en ce que** ledit boîtier de support (8) est configuré pour un engagement avec des éléments de connexion (17a, 17b) d'un connecteur, pour connecter ledit chargeur de batterie (7) et ledit au moins un dispositif utilisateur (3) à ladite batterie (5).

2. Dispositif selon la revendication 1, **caractérisé en ce que** ledit moyen de transducteur de courant (13) comprend un élément résistif (16) monté en série avec lesdits premier et second câbles d'alimentation (10, 11) ; ledit élément résistif (16) ayant, aux extrémités opposées, un premier et un second contact de détection (18, 19) connectés audit circuit électronique de contrôle (12).

3. Dispositif selon l'une quelconque des revendications précédentes, **caractérisé en ce que** ledit circuit électronique de contrôle (12) comprend également un circuit de détection de courant (28) connecté auxdits premier et second contacts de détection (18, 19) dudit moyen de transducteur de courant (13) et délivrant un premier signal de contrôle (sᵢ) ; un circuit de détection de voltage (29) délivrant un second signal de contrôle (sᵥ) se rapportant à un voltage (v_{b}) entre lesdits premier et second câbles d'alimentation (10, 11) ; et un moyen de détection de température (30).

4. Dispositif selon la revendication (3), **caractérisé en ce que** ledit circuit électronique de contrôle (12) comprend un moyen de traitement numérique (23) connecté au dit circuit de détection de courant (28) et audit circuit de détection de voltage pour recevoir lesdits premier et second signaux de contrôle (sᵢ, sᵥ), et pour délivrer un certain nombre de signaux de déclenchement (EN1, EN2) ; un moyen de mémoire (25) connecté audit moyen de traitement numérique (23) ; et un moyen de communication en série (26).

5. Système pour l'alimentation d'un véhicule électrique de travail, et comprenant un moteur électrique, une batterie (5), un chargeur de batterie (7), et un dispositif de connexion (6) pour connecter ladite batterie (5) alternativement audit dispositif utilisateur (3) et audit chargeur de batterie (7) ; **caractérisé en ce que** ledit dispositif de connexion (6) est revendiqué dans l'une quelconque des revendications 1 à 4.
